# EUROPEAN PATENT APPLICATION

(11) **EP 4 626 130 A1**
(43) Date of publication of application: **01.10.2025**
(21) Application number: 24759482.3
(22) Date of filing: 25.01.2024
(51) Int. Cl.: H04W 76/15

(54) **COMMUNICATION METHOD AND COMMUNICATION APPARATUS**

(30) Priority: 24.02.2023 CN 202310203130
(71) Applicant: Huawei Technologies Co., Ltd., Shenzhen, Guangdong 518129 (CN)
(72) Inventor: HAN, Yunfeng, Shenzhen, Guangdong 518129 (CN); YUE, Huawei, Shenzhen, Guangdong 518129 (CN)
(74) Representative: Gill Jennings & Every LLP
(86) International application number: PCT/CN2024/074092
(87) International publication number: WO 2024/174805

(57) **Abstract**

This application provides a communication method and a communication apparatus. The method includes: broadcasting a beacon frame, where the beacon frame includes link information of a plurality of links, and the plurality of links are deployed on a plurality of devices in a multi-link network; and receiving a first association request from a terminal device, where the first association request indicates to associate with at least one of the plurality of links. In this solution, the plurality of devices form the multi-link network, the plurality of devices form a logical multi-link device, the multi-link network includes a plurality of links, and the terminal device may select one or more of the plurality of links for communication. Therefore, this solution has throughput and latency gains, and can improve communication efficiency.

## Description

### CROSS-REFERENCE TO RELATED APPLICATIONS

This application claims priority to Chinese Patent Application No. 202310203130.4, filed with the China National Intellectual Property Administration on February 24, 2023 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

To achieve an objective of efficient multi-band (for example, 2 gigahertz (GHz), 5 GHz, and 6 GHz) operations, multi-link operations (multi-link operation, MLO) are currently proposed to achieve load balancing, multi-band aggregation, and synchronous downlink/uplink transmission.

A multi-link device (multi-link device, MLD) is an entity device that supports an MLO function. The multi-link device supports uplink and downlink data transmission by simultaneously using a plurality of bands (bands).

The multi-link device can implement that a same entity device provides a plurality of links, and communicate with a terminal device through the plurality of links, to improve communication efficiency. However, how to further improve communication efficiency needs to be further studied.

### SUMMARY

Embodiments of this application provide a communication method and a communication apparatus, to improve communication efficiency.

According to a first aspect, an embodiment of this application provides a communication method. The method may be performed by a first device in a multi-link network or a module (for example, a chip) used in the first device. For example, the first device performs the method. The method includes: broadcasting a beacon frame, where the beacon frame includes link information of a plurality of links, and the plurality of links are deployed on a plurality of devices in the multi-link network; and receiving a first association request from a terminal device, where the first association request indicates to associate with at least one of the plurality of links.

In the foregoing solution, the plurality of devices form the multi-link network, the plurality of devices form a logical multi-link device, the multi-link network includes a plurality of links, and the terminal device may select one or more of the plurality of links for communication. Therefore, this solution has throughput and latency gains, and can improve communication efficiency.

In a possible implementation method, the plurality of links include at least two links operating on a same channel, and the at least two links are separately deployed on at least two devices in the plurality of devices.

In the foregoing solution, a plurality of links in the multi-link network may operate on a same channel. Therefore, when the terminal device roams, a link in the plurality of links may provide a high-quality service for the terminal device based on a current location of the terminal device. In this way, an optimal service can be provided for the terminal device, and communication quality of the terminal device can be improved.

In a possible implementation method, when the first association request indicates to associate with a first link in the at least two links, the first link is configured to be in an active state, and a link other than the first link in the at least two links is configured to be in an inactive state.

In the foregoing solution, for a plurality of links operating on a same channel, only one link is in the active state at a same moment. In this way, mutual interference between the plurality of links can be avoided.

In a possible implementation method, the method further includes: receiving a first packet; and sending the first packet to the terminal device through the first link.

In a possible implementation method, the first device is a main control device in the multi-link network, and the method further includes: updating a block acknowledgment window based on a sending status of the first packet, where the block acknowledgment window indicates a to-be-sent packet.

In a possible implementation method, the first device is the main control device in the multi-link network, and the method further includes: releasing the first packet when the first packet is successfully sent to the terminal device.

In a possible implementation method, the method further includes: receiving a second association request from the terminal device, where the second association request indicates to associate with a second link in the at least two links, the second link is configured to be in the active state, and the first link is configured to be in the inactive state.

In the foregoing solution, a link switching service can be provided for the terminal device, and communication quality of the terminal device can be improved.

In a possible implementation method, the plurality of links include at least two links operating on different channels.

In a possible implementation method, the first association request indicates to associate with a third link and a fourth link in the at least two links, and both the third link and the fourth link are configured to be in an active state.

In the foregoing solution, a plurality of links operating on different channels in the multi-link network may simultaneously provide services for the terminal device. Therefore, a throughput of the terminal device can be improved, to improve communication efficiency.

In a possible implementation method, the method further includes: receiving a second packet; and sending the second packet to the terminal device through the third link and/or the fourth link.

In a possible implementation method, the first device is the main control device in the multi-link network, and the method further includes: sending configuration information to a device other than the first device in the plurality of devices, where the configuration information includes an identifier of a configured link and a channel number corresponding to the configured link.

According to a second aspect, an embodiment of this application provides a communication method. The method may be performed by a terminal device or a module (for example, a chip) used in the terminal device. For example, the terminal device performs the method. The method includes: receiving a beacon frame from a first device in a multi-link network, where the beacon frame includes link information of a plurality of links, and the plurality of links are deployed on a plurality of devices in the multi-link network; and sending a first association request to the first device, where the first association request indicates to associate with at least one of the plurality of links.

In the foregoing solution, the plurality of devices form the multi-link network, the plurality of devices form a logical multi-link device, the multi-link network includes a plurality of links, and the terminal device may select one or more of the plurality of links for communication. Therefore, this solution has throughput and latency gains, and can improve communication efficiency.

In a possible implementation method, the plurality of links include at least two links operating on a same channel, and the at least two links are separately deployed on at least two devices in the plurality of devices.

In the foregoing solution, a plurality of links in the multi-link network may operate on a same channel. Therefore, when the terminal device roams, a link in the plurality of links may provide a high-quality service for the terminal device based on a current location of the terminal device. In this way, an optimal service can be provided for the terminal device, and communication quality of the terminal device can be improved.

In a possible implementation method, when the first association request indicates to associate with a first link in the at least two links, the first link is configured to be in an active state, and a link other than the first link in the at least two links is configured to be in an inactive state.

In the foregoing solution, for a plurality of links operating on a same channel, only one link is in the active state at a same moment. In this way, mutual interference between the plurality of links can be avoided.

In a possible implementation method, the method further includes: receiving a first packet from the first link.

In a possible implementation method, the method further includes: sending a second association request to the first device, where the second association request indicates to associate with a second link in the at least two links, the second link is configured to be in the active state, and the first link is configured to be in the inactive state.

In the foregoing solution, a link switching service can be provided for the terminal device, and communication quality of the terminal device can be improved.

In a possible implementation method, the sending a second association request to the first device includes: when a first condition is met, sending the second association request to the first device, where the first condition includes one or more of the following: Quality of the first link is lower than a first threshold; quality of the second link is higher than a second threshold; and the quality of the second link is higher than the quality of the first link.

In a possible implementation method, the plurality of links include at least two links operating on different channels.

In a possible implementation method, the first association request indicates to associate with a third link and a fourth link in the at least two links, and both the third link and the fourth link are configured to be in an active state.

In the foregoing solution, a plurality of links operating on different channels in the multi-link network may simultaneously provide services for the terminal device. Therefore, a throughput of the terminal device can be improved, to improve communication efficiency.

In a possible implementation method, the method further includes: receiving a second packet from the third link and/or the fourth link.

According to a third aspect, an embodiment of this application provides a communication apparatus. The apparatus may be a first device, or may be a module (for example, a chip) used in the first device. The apparatus has a function of implementing any implementation method according to the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a terminal device, or may be a module (for example, a chip) used in the terminal device. The apparatus has a function of implementing any implementation method according to the second aspect. The function may be implemented by hardware, or may be implemented by hardware executing corresponding software. The hardware or the software includes one or more modules corresponding to the function.

According to a fifth aspect, an embodiment of this application provides a communication apparatus, including a processor coupled to a memory. The processor is configured to invoke a program stored in the memory, to perform any implementation method according to the first aspect to the second aspect. The memory may be located inside or outside the apparatus. In addition, there may be one or more processors.

According to a sixth aspect, an embodiment of this application provides a communication apparatus, including a processor and a memory. The memory is configured to store computer instructions. When the apparatus is run, the processor executes the computer instructions stored in the memory, so that the apparatus performs any implementation method according to the first aspect to the second aspect.

According to a seventh aspect, an embodiment of this application provides a communication apparatus, including a unit or means (means) configured to perform the steps in any implementation method according to the first aspect to the second aspect.

According to an eighth aspect, an embodiment of this application provides a communication apparatus, including a processor and an interface circuit. The processor is configured to communicate with another apparatus through the interface circuit, and perform any implementation method according to the first aspect to the second aspect. There are one or more processors.

According to a ninth aspect, an embodiment of this application further provides a computer program product. The computer program product includes a computer program or instructions. When the computer program or the instructions are run by a communication apparatus, any implementation method according to the first aspect to the second aspect is performed.

According to a tenth aspect, an embodiment of this application further provides a computer-readable storage medium. The computer-readable storage medium stores instructions, and when the instructions are run on a communication apparatus, any implementation method according to the first aspect to the second aspect is performed.

According to an eleventh aspect, an embodiment of this application further provides a chip system, including a processor, configured to perform any implementation method according to the first aspect to the second aspect.

### BRIEF DESCRIPTION OF DRAWINGS

FIG. 1 is a diagram of a single-link device;
FIG. 2 is a diagram of a multi-link device;
FIG. 3 is a diagram of a multi-link network according to an embodiment of this application;
FIG. 4 is a diagram of an example of a multi-link network according to an embodiment of this application;
FIG. 5 is a schematic flowchart of a communication method according to an embodiment of this application;
FIG. 6 is a diagram of an example of a multi-link network according to an embodiment of this application;
FIG. 7 is a diagram of an example of a multi-link network according to an embodiment of this application;
FIG. 8 is a diagram of an example of a multi-link network according to an embodiment of this application;
FIG. 9 is a diagram of an example of a multi-link network according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

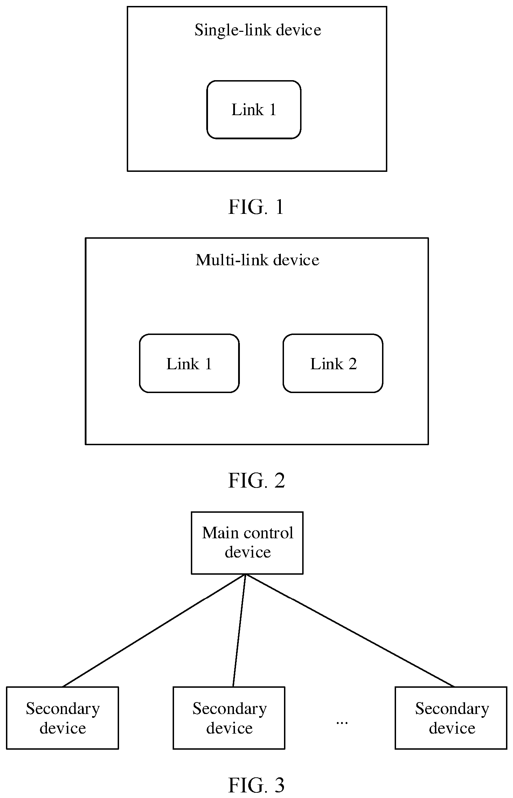

FIG. 1 is a diagram of a single-link device. Only one data transmission link, namely, a link 1, is deployed in the single-link device. The single-link device communicates with a terminal device through the link 1.

To achieve an objective of efficient multi-band (for example, 2 GHz, 5 GHz, and 6 GHz) operations, multi-link operations (MLOs) are currently proposed to achieve load balancing, multi-band aggregation, and synchronous downlink/uplink transmission. A multi-link device (MLD) is an entity device that supports an MLO function. The multi-link device supports uplink and downlink data transmission by simultaneously using a plurality of bands.

FIG. 2 is a diagram of a multi-link device. A multi-link device supports two or more bands, and each band corresponds to one link. In FIG. 2, two links are used as an example. The band herein may be 2 GHz, 5 GHz, 6 GHz, or the like. For example, a first link corresponds to 2 GHz, and a second link corresponds to 5 GHz. Alternatively, the first link corresponds to 2 GHz, and the second link corresponds to 6 GHz. Alternatively, the first link corresponds to 5 GHz, the second link corresponds to 6 GHz, and the like. In addition, one multi-link device is one entity device, in other words, one entity device supports two or more links.

The single-link device in embodiments of this application may be an access point (access point, AP) device, a terminal device, or the like, and the multi-link device may also be an access point device, a terminal device, or the like.

The access point device is a wireless hub (HUB) for a wireless network, and is an access point for a terminal device to access a wired Ethernet backbone. The access point device can be easily mounted on a ceiling or wall to provide wide signal coverage in open space.

The terminal device is a device having a wireless transceiver function. The terminal device may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, including an indoor or outdoor device. During specific application, the terminal device may be a cellular phone, a mobile phone (mobile phone), a tablet computer (pad), a wearable device, a smart point of sale (point of sale, POS) machine, a customer-premises equipment (customer-premises equipment, CPE), a computer having a wireless transceiver function, a virtual reality (virtual reality, VR) terminal, an augmented reality (augmented reality, AR) terminal, a terminal device in industrial control (industrial control), a terminal device in self-driving (self-driving), a terminal device in remote medical (remote medical), a terminal device in a smart grid (smart grid), a terminal device in a smart city (smart city), a terminal in a smart home (smart home), or the like.

In embodiments of this application, when the multi-link device is an AP, in other words, the AP has the MLO function, the AP is also referred to as an access point multi-link device (AP MLD). When the multi-link device is a terminal device, in other words, the terminal device has the MLO function, the terminal device is also referred to as a non-access point multi-link device (non-AP MLD) or a station (station, STA).

In embodiments of this application, when the single-link device is an AP, the AP is also referred to as an access point single-link device. When the single-link device is a terminal device, the terminal device is also referred to as a non-access point single-link device or a station.

The multi-link device can implement that a same entity device provides a plurality of links, and communicate with a terminal device through the plurality of links, to improve communication efficiency. However, how to further improve communication efficiency needs to be further studied.

To resolve the foregoing problem, this application provides a solution in which a plurality of entity devices form a multi-link network (or a communication system). FIG. 3 is a diagram of a multi-link network according to an embodiment of this application. The multi-link network includes a plurality of devices, and the plurality of devices include a main control device and one or more secondary devices. The plurality of devices are all entity devices. There may be one or more main control devices. For ease of description, this application is described by using an example in which there is one main control device. Any device (that is, the main control device or the secondary device) in the multi-link network may be an access point multi-link device or an access point single-link device, in other words, one or more links are deployed on any device in the multi-link network. Any two devices in the multi-link network are wiredly connected through a backhaul (backhaul) link (for example, an optical fiber or the Giga Ethernet) or wirelessly connected through a wireless link. The plurality of devices form a logical multi-link device. Link identifiers are uniformly allocated to a plurality of links in the multi-link network. In other words, an identifier of each link in the multi-link network is unique. In an implementation method, the plurality of links in the multi-link network include at least two links operating on a same channel, and the at least two links are separately deployed on at least two devices in the plurality of devices. In a possible implementation method, the plurality of links in the multi-link network include at least two links operating on different channels.

Functions of the main control device include but are not limited to the following: (1) The main control device receives a downlink packet and sends the downlink packet to a terminal device, or sends the downlink packet to one or more secondary devices, and the secondary device sends the downlink packet to the terminal device. (2) The main control device is responsible for generating information like an aggregation MAC service data unit (aggregation MAC service data unit, AMSDU), a protection number (protection number, PN), and a sequence number (sequence number, SN) in the multi-link network. (3) The main control device decides a packet sent on each link when there are a plurality of links for communication with the terminal device, for example, the main control device receives 10 downlink packets, and decides that packets 1 to 5 are sent to the terminal device through the link 1, and packets 6 to 10 are sent to the terminal device through a link 2. (4) After receiving uplink packets from the terminal device, the secondary device forwards the uplink packets to the main control device, and the main control device performs replay attack detection, deduplication, and reordering operations on the packets.

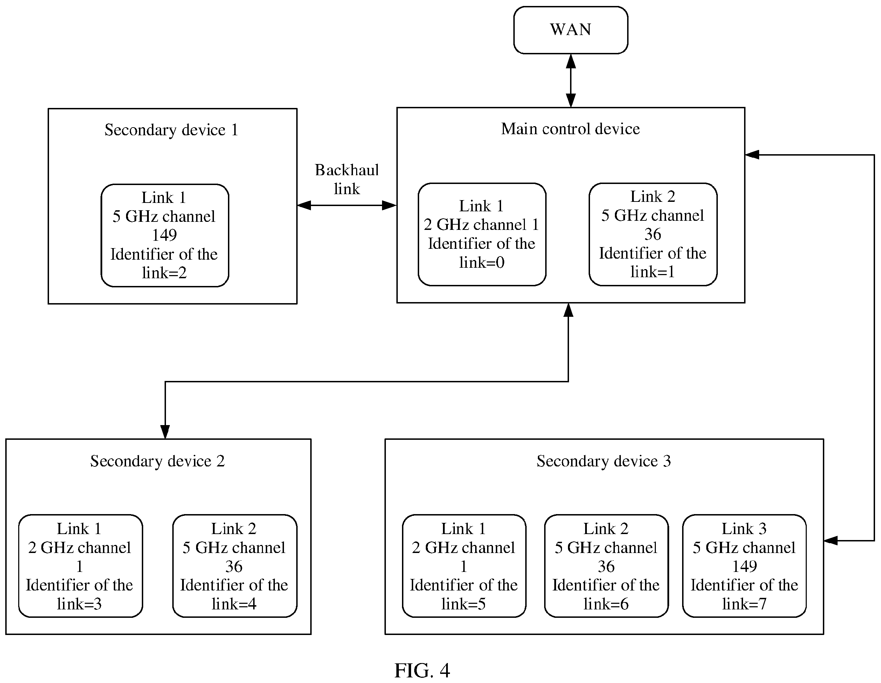

FIG. 4 is a diagram of an example of a multi-link network according to an embodiment of this application. In this example, four entity devices form a multi-link network, the four entity devices include one main control device and three secondary devices, and the main control device is connected to a wide area network (wide area network, WAN) interface. The main control device, a secondary device 2, and a secondary device 3 are all access point multi-link devices, and a secondary device 1 is an access point single-link device. In embodiments of this application, a plurality of channels may be supported in one band. For example, channels 1 to 13 are supported in a 2G band, channels 36 to 48 are supported in a low-frequency band in a 5G band, and channels 149 to 165 are supported in a high-frequency band in the 5G band.

In an example in FIG. 4, two links are deployed on the main control device, where one link corresponds to the channel 1 of the 2G band, and the other link corresponds to the channel 36 of the 5G band. A link is deployed on the secondary device 1, and the link corresponds to the channel 149 of the 5G band. Two links are deployed on the secondary device 2, where one link corresponds to the channel 1 of the 2G band, and the other link corresponds to the channel 36 of the 5G band. Three links are deployed on the secondary device 3. One link corresponds to the channel 1 of the 2G band, one link corresponds to the channel 36 of the 5G band, and the other link corresponds to the channel 149 of the 5G band.

Identifiers of the eight links in the multi-link network are: the identifier of the link 1 on the main control device is 0, the identifier of a link 2 on the main control device is 1, the identifier of the link 1 on the secondary device 1 is 2, the identifier of the link 1 on the secondary device 2 is 3, the identifier of the link 2 on the secondary device 2 is 4, the identifier of the link 1 on the secondary device 3 is 5, the identifier of the link 2 on the secondary device 3 is 6, and the identifier of the link 3 on the secondary device 3 is 7.

Links in the multi-link network may correspond to a same basic service set identifier (basic service set identifier, BSSID). For example, the foregoing eight links all correspond to a same BSSID.

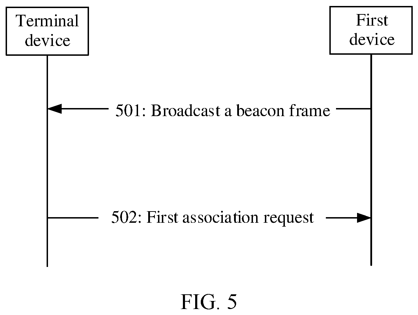

FIG. 5 is a schematic flowchart of a communication method according to an embodiment of this application. The method includes the following steps.

Step 501: A first device broadcasts a beacon frame. Correspondingly, a terminal device receives the beacon frame.

The beacon frame includes link information of a plurality of links, and the plurality of links are deployed on a plurality of devices in a multi-link network. For example, the multi-link network is shown in FIG. 3. The plurality of devices include a main control device and a secondary device in the multi-link network.

The first device may be the main control device or the secondary device in the multi-link network. In other words, both the main control device and the secondary device broadcast the beacon frame.

The link information of the plurality of links in the beacon frame includes at least one of an identifier of each link in the multi-link network, a channel number corresponding to the link, and a BSSID corresponding to the link. The BSSID indicates the multi-link network.

Step 502: The terminal device sends a first association request to the first device. Correspondingly, the first device receives the first association request.

After receiving the beacon frame, the terminal device measures quality of each link, selects at least one link from the plurality of links in the multi-link network based on the quality of each link and a link capability of the terminal device, and sends the first association request to the first device, where the first association request indicates to associate with the at least one of the plurality of links.

In the foregoing solution, the plurality of devices form the multi-link network, the plurality of devices form a logical multi-link device, the multi-link network includes a plurality of links, and the terminal device may select one or more of the plurality of links for communication. Therefore, this solution has throughput and latency gains, and can improve communication efficiency.

In an implementation method, before step 501, the main control device in the multi-link network further sends configuration information to a device other than the first device in the plurality of devices in the multi-link network, where the configuration information includes identification information of a configured link and a channel number corresponding to the configured link, and optionally further includes a BSSID corresponding to the multi-link network. An example in FIG. 4 is used. Configuration information sent by the main control device to the secondary device 1 includes an identifier 2 of a link and a channel 149 corresponding to the identifier 2 of the link; configuration information sent by the main control device to the secondary device 2 includes an identifier 3 of a link and a channel 1 corresponding to the identifier 3 of the link, and includes an identifier 4 of a link and a channel 36 corresponding to the identifier 4 of the link; and configuration information sent by the main control device to the secondary device 3 includes an identifier 5 of a link and a channel 1 corresponding to the identifier 5 of the link, includes an identifier 6 of a link and a channel 36 corresponding to the identifier 6 of the link, and includes an identifier 7 of a link and a channel 149 corresponding to the identifier 7 of the link. Optionally, the configuration information sent by the main control device to each secondary device further includes a same BSSID.

The following specifically describes the foregoing solutions in different cases based on the link capability of the terminal device.

Case 1: The link capability of the terminal device supports one band.

In other words, the terminal device supports single-link but does not support multi-link. For example, the terminal device supports only a 2G band and does not support another band.

When the first association request indicates to associate with a first link in at least two links, and the at least two links operate on a same channel, the first link is configured to be in an active state, and a link other than the first link in the at least two links is configured to be in an inactive state. In other words, for a same terminal device, only one link in links operating on a same channel is activated.

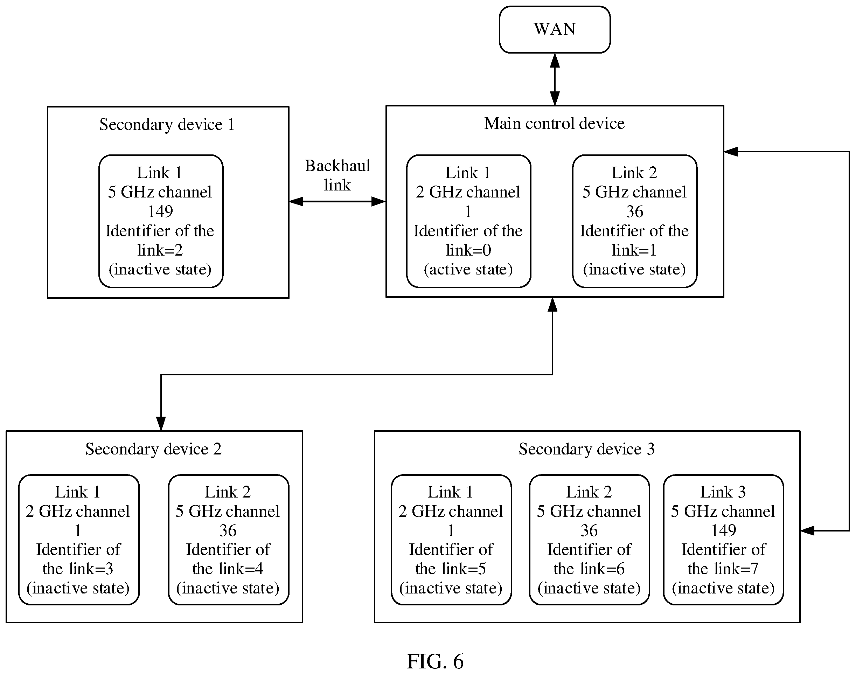

FIG. 6 is a diagram of an example of a multi-link network according to an embodiment of this application. In this example, it is assumed that a terminal device supports a 2G band, and a first association request sent by the terminal device is used to request to associate with a link 1 in a main control device, that is, an identifier of the link requested to be associated with is 0. In this case, the main control device configures the link 1 of the main control device to be in an active state, and configures other links operating on a same channel as the link 1 of the main control device to be in an inactive state, that is, both a link 1 of a secondary device 2 and a link 1 of a secondary device 3 are configured to be in the inactive state.

For a channel corresponding to a band that is not supported by the terminal device, the main control device also configures a link corresponding to the channel in the multi-link network to be in the inactive state. FIG. 6 is used as an example. Because the terminal device does not support a 5G band, for the terminal device, the main control device further configures a link 2 of the main control device, a link 1 of a secondary device 1, a link 2 of the secondary device 2, a link 2 of the secondary device 3, and a link 3 of the secondary device 3 to be in the inactive state.

It should be noted that, if the first device is a secondary device, the secondary device forwards the first association request to the main control device after receiving the first association request. If the first device is the main control device, the main control device receives the first association request from the terminal device.

The foregoing link activation method is configured based on a granularity of the terminal device. For example, for a terminal device 1 that supports only the 2G band, the main control device configures the link 1 of the main control device to be in the active state, and configures other links in the multi-link network to be in the inactive state. For a terminal device 2 that supports only the 2G band, the main control device configures a link 1 of the secondary device 3 to be in the active state, and configures other links in the multi-link network to be in the inactive state.

For the foregoing terminal device, after the first link is configured to be in the active state, if the first device receives a first packet, the first device sends the first packet to the terminal device through the first link. For example, if the first link is a link on the main control device, after receiving the first packet, the main control device sends the first packet to the terminal device through the first link on the main control device. For another example, if the first link is a link on a secondary device, after receiving the first packet, the main control device sends the first packet to the secondary device, and the secondary device sends the first packet to the terminal device through a first link on the secondary device.

If the main control device sends the first packet to the terminal device, the main control device receives a response message from the terminal device, where the response message indicates a sending status of the first packet, that is, sending success or sending failure, or if the main control device does not receive the response message, the main control device also confirms that the first packet fails to be sent.

If the secondary device sends the first packet to the terminal device, the secondary device receives a response message from the terminal device, where the response message indicates a sending status of the first packet, that is, sending success or sending failure, or if the secondary device does not receive the response message, the secondary device also confirms that the first packet fails to be sent. Then, the secondary device sends feedback information to the main control device, where the feedback information indicates the sending status of the first packet, that is, sending success or sending failure.

After learning the sending status of the first packet, the main control device may update a block acknowledgment (block acknowledgment, BA) window based on the sending status of the first packet, where the block acknowledgment window indicates a to-be-sent packet.

If the first packet has been successfully sent to the terminal device, the main control device may delete or release the first packet. If the first packet is not successfully sent to the terminal device, the main control device may continue to buffer the first packet, retransmit the first packet to the terminal device through the first link, and delete or release the first packet after the first packet is successfully sent to the terminal device.

In an implementation method, after step 502, when a first condition is met, the terminal device may send a second association request to the first device, where the second association request indicates to associate with a second link in the at least two links, and the main control device configures the second link to be in the active state, and configures the first link to be in the inactive state. In other words, the terminal device may initiate link switching, and indicates, by using the second association request, the main control device to inactivate the current first link and activate the second link. The second link and the first link operate on a same channel. FIG. 6 is used as an example. It is assumed that the second link that is requested, by the second association request sent by the terminal device, to be activated is the link 1 of the secondary device 2, the main control device configures the link 1 of the secondary device 2 to be in the active state, and configures the link 1 of the main control device to be in the inactive state.

The first condition includes one or more of the following:
(1) Quality of the first link is lower than a first threshold;
(2) quality of the second link is higher than a second threshold; and
(3) the quality of the second link is higher than the quality of the first link.

The terminal device may dynamically measure, based on the beacon frame received from each device in the multi-link network, quality of a link in each device, and record the quality of the link. The quality of the link may be represented by using a received signal strength indication (received signal strength indication, RSSI).

It should be noted that a reason for triggering the terminal device to resend the association request (for example, the second association request) is not limited in this application. For example, when a location of the terminal device moves, quality that is of a plurality of links and that is measured by the terminal device changes. For example, when congestion or a fault occurs on one or more links in the multi-link network, quality that is of a plurality of links and that is measured by the terminal device changes.

Case 2: The link capability of the terminal device supports two bands.

In other words, the terminal device supports multi-link. For example, the terminal device supports the 2G band and the 5G band.

When the first association request indicates to associate with a third link and a fourth link in the at least two links, and the at least two links operate on different channels, the third link and the fourth link are configured to be in the active state. In other words, for a same terminal device, a plurality of links operating on different channels may be activated.

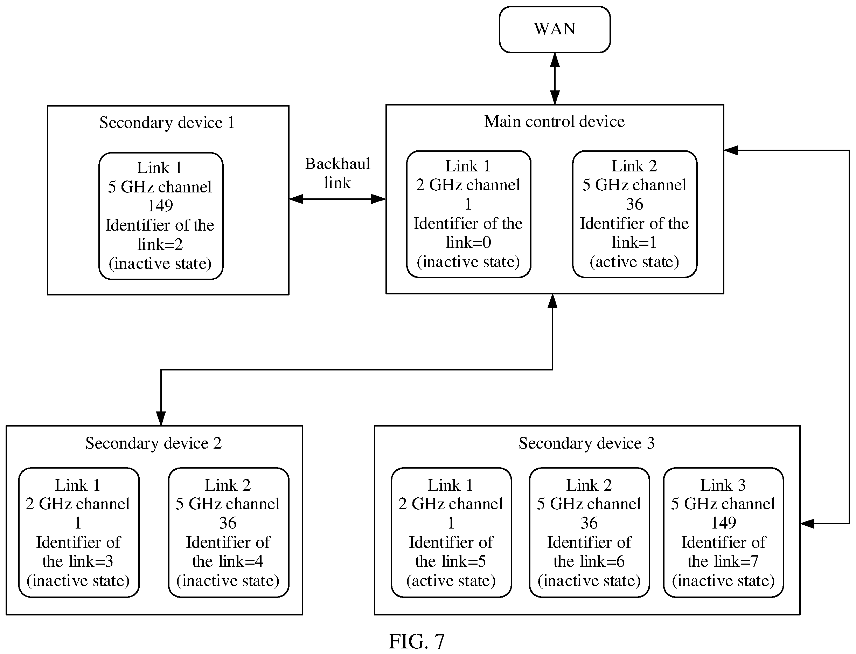

FIG. 7 is a diagram of an example of a multi-link network according to an embodiment of this application. In this example, it is assumed that the terminal device supports the 2G band and a low-frequency band in the 5G band. The first association request sent by the terminal device indicates to associate with the link 2 of the main control device and the link 1 of the secondary device 3. In other words, identifiers of the links requested to be associated with are 1 and 5. The main control device configures the link 2 of the main control device and the link 1 of the secondary device 3 to be in the active state, configures other links operating on a same channel as the link 2 of the main control device to be in the inactive state, and configures other links operating on a same channel as the link 1 of the secondary device 3 to be in the inactive state. In other words, the link 2 of the secondary device 2, the link 2 of the secondary device 3, the link 1 of the main control device, and the link 1 of the secondary device 2 are all configured to be in the inactive state.

For a channel corresponding to a band that is not supported by the terminal device, the main control device also configures a link corresponding to the channel in the multi-link network to be in the inactive state. FIG. 7 is used as an example. Because the terminal device does not support a high-frequency band in the 5G band, for the terminal device, the main control device further configures both the link 1 of the secondary device 1 and the link 3 of the secondary device 3 to be in the inactive state.

It should be noted that, if the first device is a secondary device, the secondary device forwards the first association request to the main control device after receiving the first association request. If the first device is the main control device, the main control device receives the first association request from the terminal device.

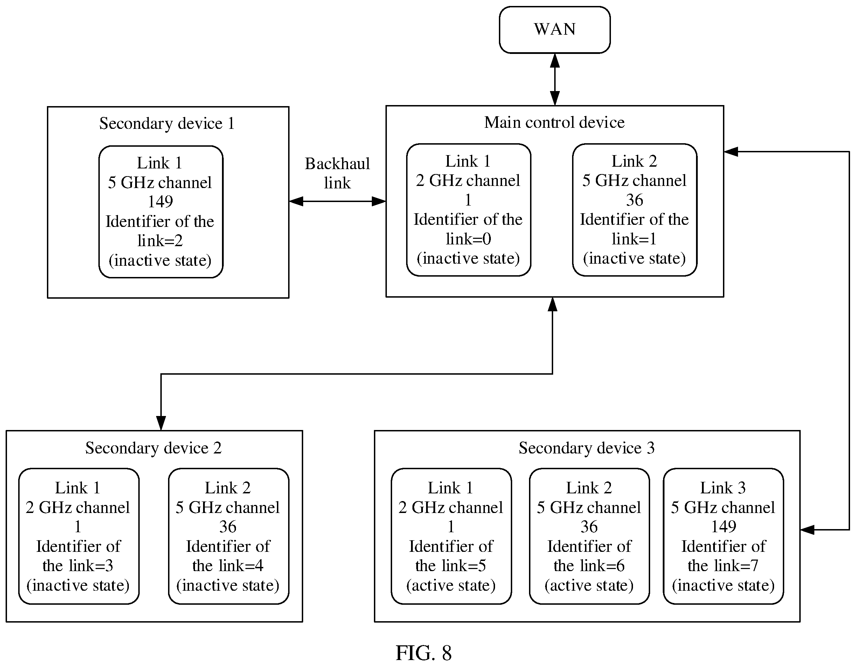

The foregoing link activation method is configured based on a granularity of the terminal device. For example, for the terminal device 1 that supports the 2G band and a 5G low-frequency band, the main control device configures the link 2 of the main control device and the link 1 of the secondary device 3 to be in the active state, and configures other links in the multi-link network to be in the inactive state. For the terminal device 2 that supports the 2G band and the 5G low-frequency band, refer to the example in FIG. 8. The main control device configures both the link 1 of the secondary device 3 and the link 2 of the secondary device 3 to be in the active state, and configures other links in the multi-link network to be in the inactive state.

For the foregoing terminal device, after the third link and the fourth link are configured to be in the active state, if the first device receives a second packet, the first device sends the second packet to the terminal device through the third link and/or the fourth link.

Similar to the foregoing case 1, in case 2, the main control device may also learn a sending status of the second packet, update the block acknowledgment window based on the sending status of the second packet, and determine whether retransmission is required. The terminal device may also request the main control device to switch the activated link. For details, refer to the foregoing description. Details are not described again.

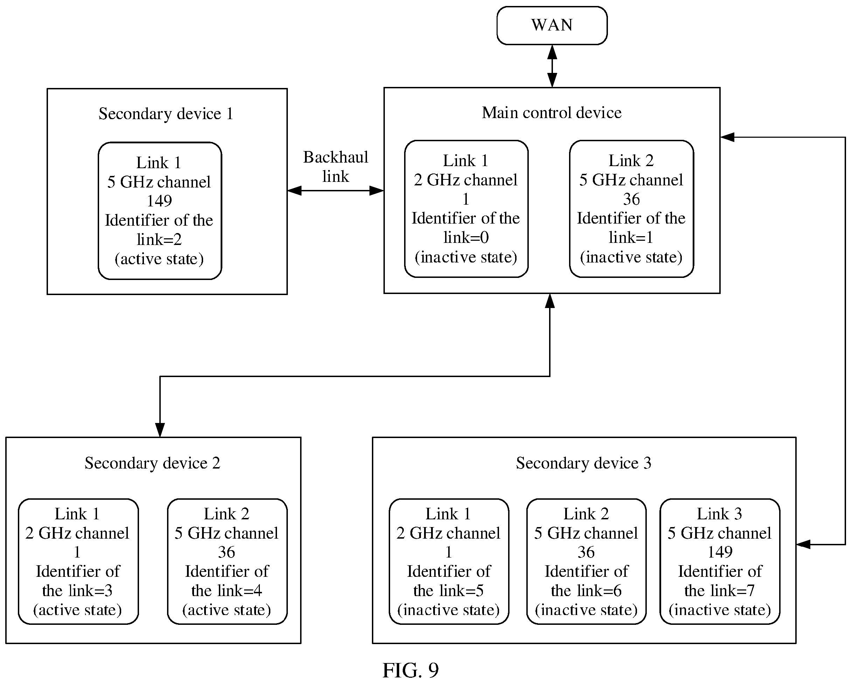

It should be noted that, if the terminal device supports three or more bands, the terminal device may request the main control device to activate three or more links operating on different channels. For example, if the terminal device supports the 2G band, the 5G low-frequency band, and a 5G high-frequency band, the terminal device may simultaneously support three links: a link corresponding to the 2G band, a link corresponding to the 5G low-frequency band, and a link corresponding to the 5G high-frequency band. FIG. 9 is used as an example. The terminal device requests to associate with the link 1 of the secondary device 1, the link 1 of the secondary device 2, and the link 2 of the secondary device 2, where the three links operate on different channels. The link 1 of the secondary device 1 corresponds to the 5G high-frequency band, the link 1 of the secondary device 2 corresponds to the 2G frequency band, and the link 2 of the secondary device 2 corresponds to the 5G low-frequency band. For the terminal device, the main control device configures the link 1 of the secondary device 1, the link 1 of the secondary device 2, and the link 2 of the secondary device 2 to be in the active state, and configures other links in the multi-link network to be in the inactive state.

In this application, when the terminal device decides to roam, that is, switch the associated link, the terminal device notifies the main control device/secondary device to perform a link activation/inactivation operation for the terminal device, without performing operations such as packet migration and key synchronization between different devices, re-obtaining an Internet protocol (internet protocol, IP) address, and obtaining an address resolution protocol (address resolution protocol, ARP), to implement seamless roaming experience with zero packet loss. After notifying the terminal device to perform dynamic link switching, the terminal device only needs to immediately switch a BSSID, a MAC address, and a multicast key corresponding to the link, to improve switching efficiency and communication efficiency of the terminal device. In addition, roaming in embodiments of this application is link switching for a granularity of the terminal device in the multi-link network. A roaming policy may be standardized by using a dynamic link switching operation (defined as MLD UserToLinkMapping, MLDU2LM) for the granularity of the terminal device, and there is no device compatibility problem.

It may be understood that, to implement the functions in the foregoing embodiments, the first device and the terminal device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

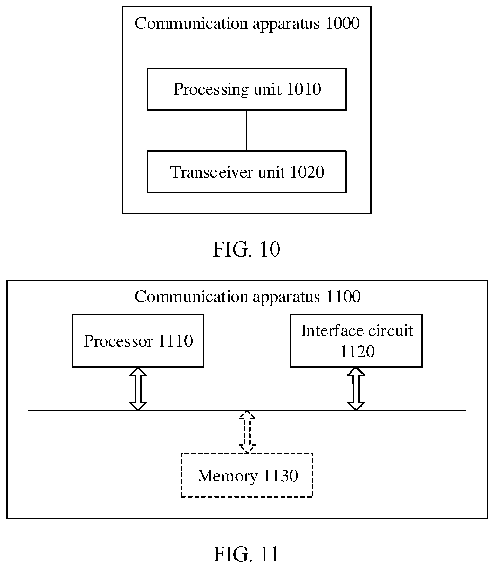

FIG. 10 and FIG. 11 each are a diagram of a structure of a possible communication apparatus according to an embodiment of this application. These communication apparatuses may be configured to implement functions of the first device or the terminal device in the foregoing method embodiments. Therefore, beneficial effect of the foregoing method embodiments can also be implemented. In embodiments of this application, the communication apparatus may be a first device or a terminal device, or may be a module (for example, a chip) used in to the first device or the terminal device.

A communication apparatus 1000 shown in FIG. 10 includes a processing unit 1010 and a transceiver unit 1020. The communication apparatus 1000 is configured to implement functions of the first device or the terminal device in the foregoing method embodiments.

When the communication apparatus 1000 is configured to implement the functions of the first device in the foregoing method embodiments, the processing unit 1010 is configured to control the transceiver unit 1020 to broadcast a beacon frame, where the beacon frame includes link information of a plurality of links, and the plurality of links are deployed on a plurality of devices in a multi-link network; and receive a first association request from a terminal device, where the first association request indicates to associate with at least one of the plurality of links.

In a possible implementation method, the plurality of links include at least two links operating on a same channel, and the at least two links are separately deployed on at least two devices in the plurality of devices.

In a possible implementation method, when the first association request indicates to associate with a first link in the at least two links, the first link is configured to be in an active state, and a link other than the first link in the at least two links is configured to be in an inactive state.

In a possible implementation method, the processing unit 1010 is further configured to control the transceiver unit 1020 to receive a first packet; and send the first packet to the terminal device through the first link.

In a possible implementation method, the first device is a main control device in the multi-link network, and the processing unit 1010 is further configured to update a block acknowledgment window based on a sending status of the first packet, where the block acknowledgment window indicates a to-be-sent packet.

In a possible implementation method, the first device is the main control device in the multi-link network, and the processing unit 1010 is further configured to release the first packet when the first packet is successfully sent to the terminal device.

In a possible implementation method, the processing unit 1010 is further configured to control the transceiver unit 1020 to receive a second association request from the terminal device, where the second association request indicates to associate with a second link in the at least two links, the second link is configured to be in the active state, and the first link is configured to be in the inactive state.

In a possible implementation method, the plurality of links include at least two links operating on different channels.

In a possible implementation method, the first association request indicates to associate with a third link and a fourth link in the at least two links, and both the third link and the fourth link are configured to be in an active state.

In a possible implementation method, the processing unit 1010 is further configured to control the transceiver unit 1020 to receive a second packet; and send the second packet to the terminal device through the third link and/or the fourth link.

In a possible implementation method, the first device is the main control device in the multi-link network, and the processing unit 1010 is further configured to control the transceiver unit 1020 to send configuration information to a device other than the first device in the plurality of devices, where the configuration information includes an identifier of a configured link and a channel number corresponding to the configured link.

When the communication apparatus 1000 is configured to implement functions of the terminal device in the foregoing method embodiments, the processing unit 1010 is configured to control the transceiver unit 1020 to receive a beacon frame from a first device in a multi-link network, where the beacon frame includes link information of a plurality of links, and the plurality of links are deployed on a plurality of devices in the multi-link network; and send a first association request to the first device, where the first association request indicates to associate with at least one of the plurality of links.

In a possible implementation method, the plurality of links include at least two links operating on a same channel, and the at least two links are separately deployed on at least two devices in the plurality of devices.

In a possible implementation method, when the first association request indicates to associate with a first link in the at least two links, the first link is configured to be in an active state, and a link other than the first link in the at least two links is configured to be in an inactive state.

In a possible implementation method, the processing unit 1010 is further configured to control the transceiver unit 1020 to receive the first packet from the first link.

In a possible implementation method, the processing unit 1010 is further configured to control the transceiver unit 1020 to send a second association request to the first device, where the second association request indicates to associate with a second link in the at least two links, the second link is configured to be in the active state, and the first link is configured to be in the inactive state.

In a possible implementation method, that the processing unit 1010 is further configured to control the transceiver unit 1020 to send a second association request to the first device specifically includes: when a first condition is met, sending the second association request to the first device, where the first condition includes one or more of the following: Quality of the first link is lower than a first threshold; quality of the second link is higher than a second threshold; and the quality of the second link is higher than the quality of the first link.

In a possible implementation method, the plurality of links include at least two links operating on different channels.

In a possible implementation method, the first association request indicates to associate with a third link and a fourth link in the at least two links, and both the third link and the fourth link are configured to be in an active state.

In a possible implementation method, the processing unit 1010 is further configured to control the transceiver unit 1020 to receive a second packet from the third link and/or the fourth link.

For more detailed descriptions about the processing unit 1010 and the transceiver unit 1020, directly refer to related descriptions in the foregoing method embodiments. Details are not described herein.

The communication apparatus 1100 shown in FIG. 11 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions executed by the processor 1110, store input data required by the processor 1110 to run the instructions, or store data generated after the processor 1110 runs the instructions.

When the communication apparatus 1100 is configured to implement the foregoing method embodiments, the processor 1110 is configured to implement functions of the processing unit 1010, and the interface circuit 1120 is configured to implement functions of the transceiver unit 1020.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a first device or a terminal device. Certainly, the processor and the storage medium may alternatively exist in the first device or the terminal device as discrete components.

All or some of the foregoing embodiments may be implemented by using software, hardware, firmware, or any combination thereof. When software is used to implement embodiments, all or some of embodiments may be implemented in a form of computer program product. The computer program product includes one or more computer programs or instructions. The computer program (English: Computer Program) is a set of instructions that indicate each step of an electronic computer or another device having a message processing capability, and is usually written in a program design language and runs on a target architecture. When the computer programs or instructions are loaded and executed on a computer, the procedures or functions in embodiments of this application are all or partially performed. The computer may be a general-purpose computer, a dedicated computer, a computer network, an access network device, a terminal device, or another programmable apparatus. The computer programs or the instructions may be stored in a computer-readable storage medium, or may be transmitted from one computer-readable storage medium to another computer-readable storage medium. For example, the computer programs or the instructions may be transmitted from one website, computer, server, or data center to another website, computer, server, or data center in a wired or wireless manner. The computer-readable storage medium may be any usable medium that can be accessed by the computer, or a data storage device, for example, a server or a data center, integrating one or more usable media. The available medium may be a magnetic medium, for example, a floppy disk, a hard disk, or a magnetic tape; may be an optical medium, for example, a digital video disc; or may be a semiconductor medium, for example, a solid state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first device in a multi-link network, wherein the method further comprises:
broadcasting a beacon frame, wherein the beacon frame comprises link information of a plurality of links, and the plurality of links are deployed on a plurality of devices in the multi-link network; and
receiving a first association request from a terminal device, wherein the first association request indicates to associate with at least one of the plurality of links.

2. The method according to claim 1, wherein the plurality of links comprise at least two links operating on a same channel, and the at least two links are separately deployed on at least two devices in the plurality of devices.

3. The method according to claim 2, wherein when the first association request indicates to associate with a first link in the at least two links, the first link is configured to be in an active state, and a link other than the first link in the at least two links is configured to be in an inactive state.

4. The method according to claim 3, wherein the method further comprises:
receiving a first packet; and
sending the first packet to the terminal device through the first link.

5. The method according to claim 4, wherein the first device is a main control device in the multi-link network;
and the method further comprises:
updating a block acknowledgment window based on a sending status of the first packet, wherein the block acknowledgment window indicates a to-be-sent packet.

6. The method according to any one of claims 3 to 5, wherein the method further comprises:
receiving a second association request from the terminal device, wherein the second association request indicates to associate with a second link in the at least two links, the second link is configured to be in the active state, and the first link is configured to be in the inactive state.

7. The method according to claim 1, wherein the plurality of links comprise at least two links operating on different channels.

8. The method according to claim 7, wherein the first association request indicates to associate with a third link and a fourth link in the at least two links, and both the third link and the fourth link are configured to be in an active state.

9. The method according to claim 8, wherein the method further comprises:
receiving a second packet; and
sending the second packet to the terminal device through the third link and/or the fourth link.

10. The method according to any one of claims 1 to 9, wherein the first device is the main control device in the multi-link network; and the method further comprises:
sending configuration information to a device other than the first device in the plurality of devices, wherein the configuration information comprises an identifier of a configured link and a channel number corresponding to the configured link.

11. A communication method, applied to a terminal device, wherein the method comprises:
receiving a beacon frame from a first device in a multi-link network, wherein the beacon frame comprises link information of a plurality of links, and the plurality of links are deployed on a plurality of devices in the multi-link network; and
sending a first association request to the first device, wherein the first association request indicates to associate with at least one of the plurality of links.

12. The method according to claim 11, wherein the plurality of links comprise at least two links operating on a same channel, and the at least two links are separately deployed on at least two devices in the plurality of devices.

13. The method according to claim 12, wherein when the first association request indicates to associate with a first link in the at least two links, the first link is configured to be in an active state, and a link other than the first link in the at least two links is configured to be in an inactive state.

14. The method according to claim 13, wherein the method further comprises:
receiving a first packet from the first link.

15. The method according to claim 13 or 14, wherein the method further comprises:
sending a second association request to the first device, wherein the second association request indicates to associate with a second link in the at least two links, the second link is configured to be in the active state, and the first link is configured to be in the inactive state.

16. The method according to claim 15, wherein the sending a second association request to the first device comprises:
when a first condition is met, sending the second association request to the first device, wherein
the first condition comprises one or more of the following:
quality of the first link is lower than a first threshold;
quality of the second link is higher than a second threshold; and
the quality of the second link is higher than the quality of the first link.

17. The method according to claim 11, wherein the plurality of links comprise at least two links operating on different channels.

18. The method according to claim 17, wherein the first association request indicates to associate with a third link and a fourth link in the at least two links, and both the third link and the fourth link are configured to be in an active state.

19. The method according to claim 18, wherein the method further comprises:
receiving a second packet from the third link and/or the fourth link.

20. A communication apparatus, comprising a processor coupled to a memory, wherein the processor is configured to invoke a program stored in the memory, to perform the method according to any one of claims 1 to 10, or perform the method according to any one of claims 11 to 19.

21. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 19 is implemented.
